# EUROPÄISCHE PATENTSCHRIFT

(11) **EP 2 201 260 B1**
(45) Veröffentlichungstag und Bekanntmachung des Hinweises auf die Patenterteilung: **29.12.2010**
(21) Anmeldenummer: 08839190.9
(22) Anmeldetag: 15.10.2008
(51) Int. Cl.: F16D 59/02

(54) **VIER-SEGMENT-BREMSE**
FOUR-SEGMENT BRAKE
FREIN CONSTITUÉ DE QUATRE SEGMENTS

(30) Priorität: 17.10.2007 DE 202007014518 U
(43) Veröffentlichungstag der Anmeldung: 30.06.2010
(73) Patentinhaber: Chr. Mayr GmbH + Co. KG, 87665 Mauerstetten (DE)
(72) Erfinder: KLINGLER, Günther, 86869 Oberostendorf (DE); EBERLE, Johann, 87660 Irsee (DE); DROPMANN, Christoph, 87600 Kaufbeuren (DE); WEISS, Harald, 87677 Stöttwang (DE)
(74) Vertreter: Ruschke, Hans Edvard
(86) Internationale Anmeldenummer: PCT/EP2008/008721
(87) Internationale Veröffentlichungsnummer: WO 2009/049871

(56) Entgegenhaltungen:
- DE-A1- 3 424 595
- DE-A1-102005 022 898
- DE-A1-102006 016 434

## Beschreibung

### Stand der Technik:

Aus der Offenlegungsschrift DE 10 2005 022 898 A1 der Fa. Mayr ist bekannt, dass eine mehrteilige elektromagnetisch lüftende, ruhestrombetätigte Federdruckbremse an einer Maschinenwand oder dergleichen befestigt wird, wobei die Bremsen stirnseitig am Umfang verteilt auf einen axial beweglichen Bremsrotor mit beiderseits durchgehenden Reibbelägen wirken, wobei an der Maschinenwand oder der Flanschplatte die eine Fläche des Reibbelages und auf der Ankerscheibe die andere Fläche des Reibbelages abgebremst wird. Bei den mehrteiligen elektromagnetischen Federdruckbremsen handelt es sich um rechteckig ausgeführte Bremsen mit ovalen Spulen im Spulenträger oder um mehrere solche kreisrund gestaltete Bremsen, wobei alle diese Bremsen jeweils eine eigene Stromzuführung haben müssen.

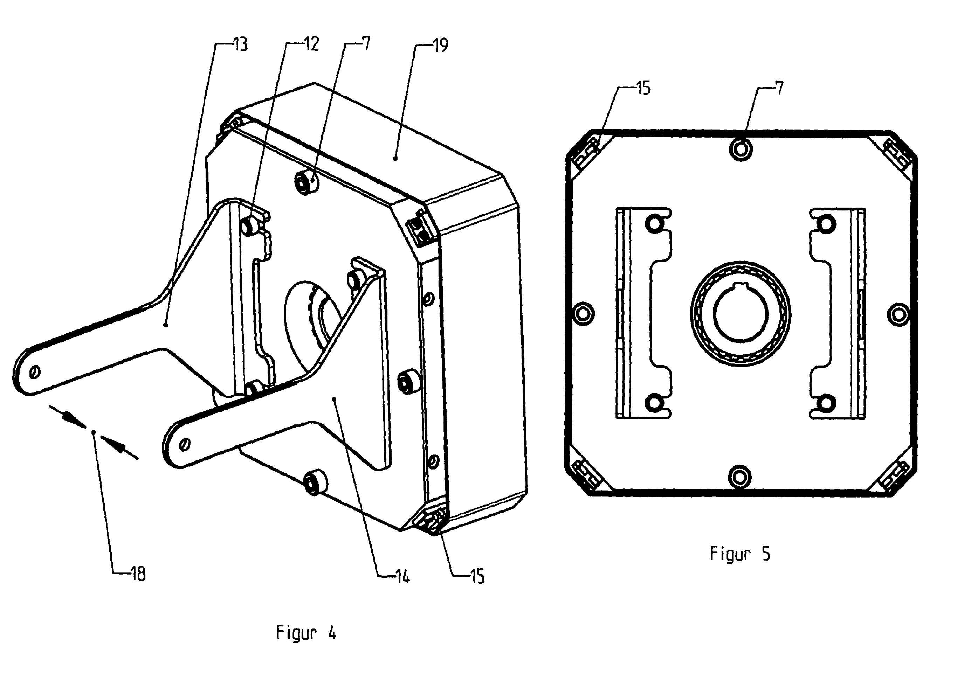

In Figur 5 der Offenlegungsschrift wird eine weitere Ausgestaltung einer solchen Bremse offenbart, bei der die Magnetspule nicht oval sondern in zwei kreisrunde Spulen pro rechteckiger Bremseneinheit aufgeteilt ist. Eine kreisrunde Spule lässt sich wesentlich kostengünstiger fertigen als eine ovale Spule. Alternativ wird darauf hingewiesen, dass der Spulenträger und die Ankerscheibe rechteckig ausgeführt sind und sich pro Bremse je zwei kreis- bzw. ringförmig ausgeführte Magnetspulen im Spulenträger raumoptimiert angeordnet befinden.

In der DE 10 2006 016 434 A1 (siehe auch WO 2007/115730) der Fa. Mayr wird ebenfalls eine elektromagnetisch lüftende Federdruckbremse beschrieben, wobei die Bremse nicht aus zwei rechteckigen oder mehreren runden Spulenträgern, wie bei DE 10 2005 022 898 A1, sondern nur aus einem einteiligen rechteckigen oder quadratischen Spulenträger mit zwei darin integrierten ovalen und einander gegenüberliegenden Spulen besteht. Dem einteiligen Spulenträger mit den zwei darin eingebetteten ovalen Spulen sind zwei rechteckige separate Ankerscheiben zugeordnet, welche bei stromlosen Magnetspulen auf einen zentralen gemeinsamen Bremsrotor drücken, der auf jeder Stirnseite mit einem Reibbelag versehen ist. Der Bremsrotor befindet sich auf einer axial verzahnten Nabe und ist axial beweglich.

### Aufgabenstellung:

Aufbauend auf dem Stand der Technik nach der Offenlegungsschrift DE 10 2005 022 898 A1 und der DE 10 2006 016 434 A1 soll eine weitere Optimierung einer Bremse geschaffen werden, welche auf die Stirnfläche eines zentralen rotierenden Elementes bzw. eines Bremsrotors angreift. Da es sich bei diesen elektromagnetischen Federdruckbremsen um Bremsen handelt, welche in der Aufzugstechnik und Bühnentechnik eingesetzt werden, müssen diese Bremssysteme im Übrigen unbedingt redundant sein, d. h. sie müssen so aufgebaut und konzipiert werden, dass sie bei einem eventuellen Versagen von einzelnen Bremsenteilen noch immer das erforderliche Mindest-Bremsmoment erzeugen können.

Um die Redundanz zu erreichen, besteht zwar grundsätzlich die Möglichkeit einfach zwei gleiche Bremsen hintereinander oder nebeneinander anzuordnen und somit ein absolut redundantes Bremssystem zu konzipieren. Eine Möglichkeit besteht darin, zwei gleiche Bremsen am Umfang anzuordnen, die beide gleichzeitig axial auf den Bremsrotor wirken. Dies wird in der DE 10 2005 022 898 A1 dargestellt. In der DE 10 2006 016 434 A1 wird eine komplette Bremse mit zwei redundanten Bremskreisen integriert in einer einteiligen Bremse gezeigt.

Bei beiden Bremssystemen besteht der Nachteil, dass bei einer NOT-Bremsung wie z.B. bei einem Stromausfall beide Bremsen jeweils mit dem vollen Bremsmoment schlagartig abbremsen und somit starke Stöße und Schwingungen für die dafür betroffenen Maschinenteile entstehen. Es wird nämlich mit 200 % Bremsmoment (100 % Bremsmoment je Bremse) abgebremst. Da es sich um ein redundantes Bremssystem handeln muss, muss die Auslegung auf 200 % erfolgen, damit im Störfall einer Bremse bzw. Ausfall eines Bremsenteils noch immer 100 % Bremsmoment in der Anlage vorhanden sind.

Die der vorliegenden Erfindung zugrunde liegende Aufgabe besteht außer einer Optimierung einer Bremse auch noch darin, dass ein Bremssystem geschaffen wird, das im Notfall nicht mit 200 % abbremst sondern mit einem niedrigeren Wert, wie z.B. 133,33 %, aber trotzdem beim Ausfall eines Bremskreises immer noch 100 % des Bremsmomentes beinhaltet. "Optimierung" einer Bremse bedeutet in diesem Zusammenhang ein möglichst kleiner Bauraum (= Platzbedarf) speziell im Durchmesser, wenige Anschraubungen, einfache Kabelführung und einfacheres Handling, was die Bremse letztendlich kostengünstiger macht.

Mit dem erfindungsgemäßen weicheren und weniger stoßartigen Abbremsen im Notfall können auch die nachfolgenden Bauteile der zugeordneten Maschinen bzw. Maschinenteile kleiner und günstiger dimensioniert werden.

### Lösung:

Eine solche Optimierung und ein weicheres Abbremsen wird dadurch erreicht, dass man eine rechteckig oder vorzugsweise quadratisch ausgeführte Bremse mit jeweils gleichmäßig am Umfang verteilten vier runden Spulen symmetrisch verteilt in dem einteiligen Spulenträger vorsieht und diesem jeweils vier separate, rechteckige bzw. vorzugsweise quadratische Ankerscheiben zuordnet, entsprechend mit Federn beaufschlagt, um gegen den Bremsrotor axial zu drücken, welcher dann ein entsprechendes Bremsmoment erzeugt.

Alle vier Spulen mit ihren Ankerscheiben können separat voneinander betätigt werden und können auch separat voneinander auf ihre ordnungsgemäße Funktion überprüft werden.

Für die Drehmomentauslegung gilt folgende Überlegung: Wenn man von einem erforderlichen Bremsdrehmoment von 100 % ausgeht, wird jeder der vier Bremskreise so ausgelegt, dass sie zusammen 133,33 % Bremsmoment haben, d. h. bereits drei der insgesamt vier Bremskreise ergeben zusammen das erforderliche Gesamt-Bremsmoment von 100 %. Fällt nun ein Bremskreis durch einen mechanischen oder elektrischen Fehler aus, werden von den verbliebenen drei funktionsfähigen Bremsenteilen immer noch die geforderten 100 % Bremsmoment erreicht.

Sollte andererseits eine Notbremsung bei voll funktionsfähiger Gesamtbremse stattfinden und alle vier Bremskreise gleichzeitig einfallen, wird ein Bremsmoment von 133,33 % erzeugt.

In Gegenüberstellung zu den eingangs erläuterten redundanten Bremssystemen mit einer Notbremsleistung von 200 % wird hier eine wesentliche Verbesserung erzielt. Bei den bekannten Bremssystemen mit doppelter Bremse wird folgende Berechnung angesetzt: Nachdem beim Ausfall einer Bremse immer noch 100 % Bremsmoment vorhanden sein muss, müssen beide Bremsen jeweils auf 100 % ausgelegt sein und es ergeben sich für zwei Bremsen also 200 %.

Ergibt sich ein Notfall, z. B. ein Stromausfall, werden zwangsläufig beide Bremsen im Stand der Technik zur gleichen Zeit betätigt und es wird sehr heftig abgebremst, nämlich mit 200 % des erforderlichen Bremsmomentes. Dies führt zu sehr stoßartigen Belastungen und erzeugt unerwünschte Schwingungen in der abgebremsten Gesamtanlage, und die davon betroffenen Bauteile müssen ausreichend stark überdimensioniert werden. Bei dem erfindungsgemäßen Bremssystem werden dagegen im Notfall (wenn alle vier Bremsenteile ordnungsgemäß funktionieren) nur 133,33 % aktiv, d h. es werden 66,66 % weniger Bremsmoment als im eingangs erläuterten herkömmlichen redundanten Bremssystem mit zwei jeweils zu 100 % Bremsleistung ausgelegten Teilbremsen wirksam.

In den Zeichnungen wird ein Ausführungsbeispiel der Erfindung dargestellt:
**Figur 1** zeigt einen Schnitt durch die Bremse, wobei in der oberen Hälfte die Spule und in der unteren Hälfte die Druckfedern und die Drehmomentübertragung vom Spulenträger zur Ankerscheibe im Schnittbild dargestellt werden, und zwar entlang der Schnittlinie A-A in der nachfolgenden Figur.
**Figur 2** zeigt die linke Seitenansicht der Figur 1 mit den vier Magnetspulen gestrichelt gezeichnet. Zugleich ist die Schnittlinie A-A der Fig. 1 eingezeichnet.
**Figur 3** zeigt eine Explosionszeichnung des Ausführungsbeispiels mit den drei Baugruppen Flanschplatte, Bremsrotor und einteiliger Spulenträger mit den darauf gelagerten bzw. abgestützten vier unabhängigen und voneinander separaten Ankerscheiben.
**Figur 4** zeigt ein Schrägbild von der Rückseite der Bremse mit zwei steckbaren Handlüftungen für die Notbetätigung der Bremse, d. h. für das Lösen der Bremse entgegen der Wirkung der Druckfedern bei stromlosen Spulen.
**Figur 5** zeigt eine Draufsicht auf die Rückseite der Bremse mit den vier Mikroschaltern zum Abgreifen der Betätigung der vier Ankerscheiben (Lüftüberwachung).

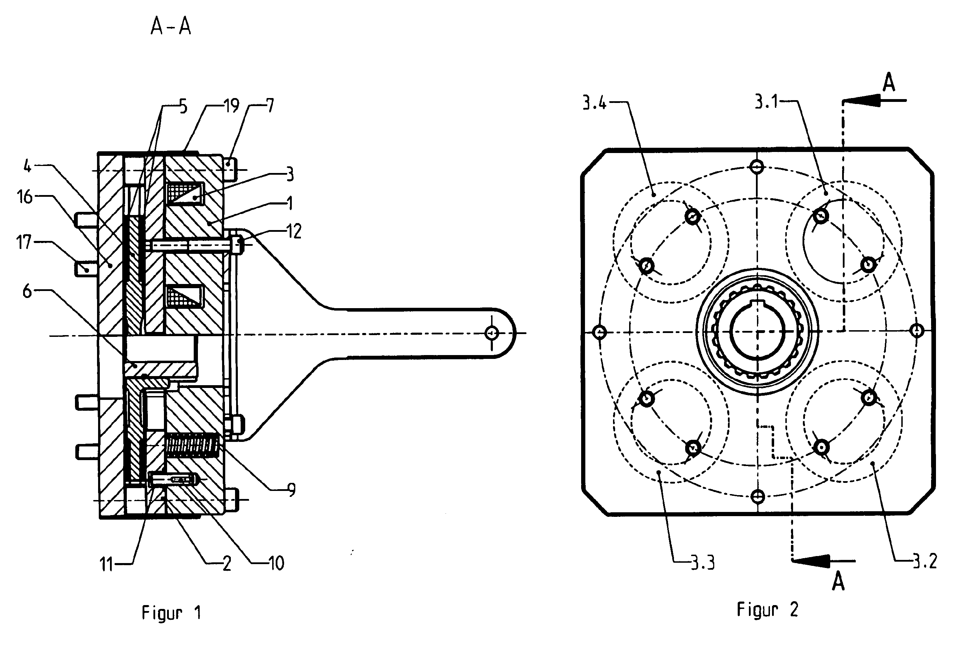

In Figur 1 wird die Bremse im Schnitt dargestellt. Es handelt sich um eine ruhestrombetätigte Federdruckbremse mit folgender Wirkungsweise: Wird auf den einteiligen Spulenträger 1 mit seinen vier darin angeordneten, vorzugsweise punktsymmetrisch zur zentralen Längsachse der Bremse verteilten kreisrunden Spulen 3 (3.1, 3.2, 3.3, 3.4) eine Gleichspannung gegeben, erzeugt der Spulenträger 1 vier Magnetfelder und die vier separaten Ankerscheiben 2 (2.1, 2.2, 2.3, 2.4) werden über einen Luftspalt gegen den Federdruck von Druckfedern 9 im Spulenträger 1 angezogen. Dadurch kann sich der Bremsrotor 4 mit den beidseitig angeordneten Reibbelägen 5 frei drehen.

Auf einer in den Zeichnungen nicht dargestellte zentrale Welle, welche es abzubremsen gilt, wird die verzahnte Nabe 6 befestigt. Das Drehmoment wird über eine Passfederverbindung von der Welle auf die verzahnte Nabe 6 übertragen. Von der verzahnten Nabe 6 wird das Drehmoment über eine Verzahnung im Bremsrotor 4 weitergeleitet.

Wird der Strom von den Magnetspulen 3 (3.1, 3.2, 3.3, 3.4) weggenommen, brechen die Magnetfelder zusammen und die vier separaten Ankerscheiben 2 (2.1, 2.2, 2.3, 2.4) werden über die Druckfedern 9 gegen den Bremsrotor 4 mit den beiden Reibbelägen 5 gedrückt. Als Gegenreibfläche dient eine Flanschplatte 16, welche mit Befestigungsschrauben 17 an einer nicht dargestellten Maschinenwand befestigt wird. Die Drehmomentübertragung auf die Ankerscheibe erfolgt mittels der Übertragungsstifte 10, welche im Spulenträger 1 eingepresst sind und in die Bohrung 11 der Ankerscheibe 2 hineinragen.

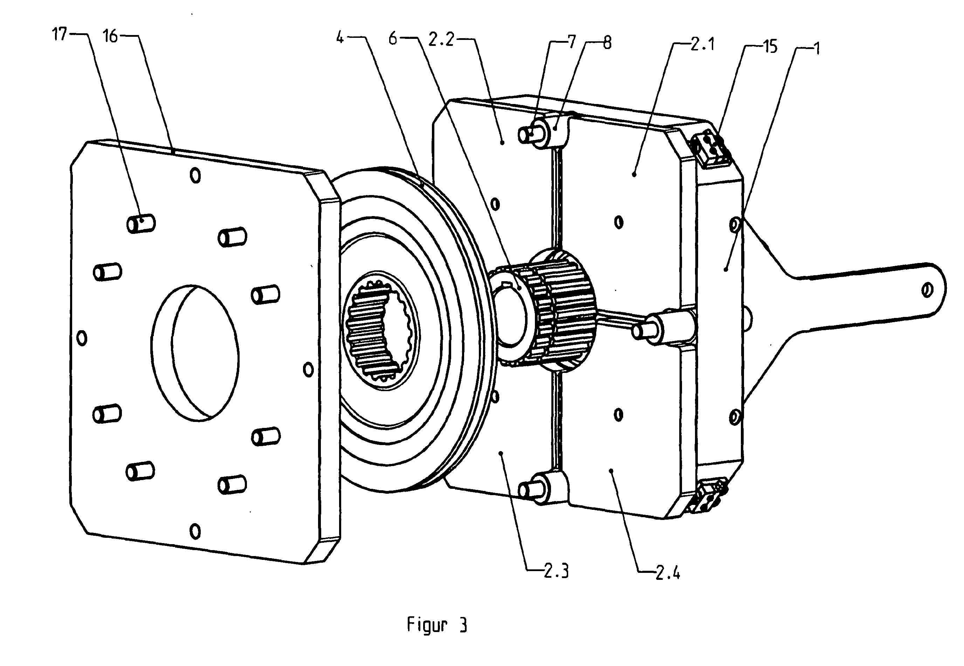

Mit den Befestigungsschrauben 7 wird die Bremse über Abstandsbuchsen 8 an der Flanschplatte 16 befestigt. Mit diesen Abstandsbuchsen 8 wird dann der Luftspalt zwischen Spulenträger 1 und den Ankerscheiben 2 (2.1, 2.2, 2.3, 2.4) erzeugt, welcher beim Anziehen der Ankerscheibe auf Null zurückgeht und den Bremsrotor 4 zum Drehen freimacht. Wie sich aus der Ansicht der Figur 3 ergibt, sind die Befestigungsschrauben 7 derart auf dem Spulenträger angeordnet, dass sie gerade im Bereich der Trennfuge zwischen den vier einzelnen Ankerscheiben positioniert sind.

In Figur 2 wird gezeigt, dass es sich um vier Magnetspulen 3.1, 3.2, 3.3, 3.4 handelt, welche alle vier separat mit Strom angesteuert werden können. Die Magnetspulen 3.1 - 3.4 sind in dem einteiligen, vorzugsweise quadratisch ausgebildeten Spulenträger verteilt angeordnet, und zwar punktsymmetrisch zur zentralen Längsachse der Bremse und im Zentrum des jeweiligen Quadranten, der den vier separaten Ankerscheiben 2.1 - 2.4 entspricht.

In Figur 3 wird deutlich, dass jeder einzelnen Magnetspule 3 jeweils eine separate eigenständige Ankerscheibe 2.1, 2.2, 2.3, 2.4 zugeordnet ist. Somit werden vier getrennte unabhängige Bremskreise in einer ansonsten einteiligen, vorzugsweise im wesentlichen quadratischen Bremse erzielt.

In Figur 4 und Figur 5 wird gezeigt, dass sich an jeder der vier abgeflachten Ecken des Spulenträgers 1 ein Mikroschalter 15 befindet und somit an jeder der vier Ankerscheiben 2.1, 2.2, 2.3, 2.4 abgegriffen wird, ob die Bremse gebremst oder gelüftet ist, d. h. jeder der Mikroschalter ist einem der vier Ankerscheiben zugeordnet und fühlt ab, ob die jeweilige Ankerscheibe magnetisch angezogen oder aufgrund der Wirkung der zugeordneten Druckfedern 9 abgefallen ist. Diese vier Mikroschalter 15 können elektrisch jeweils separat, aber auch in Reihe geschaltet werden. Bei einer Reihenschaltung der Mikroschalter wird nur der Störfall ganz generell angezeigt, während wenn sie separat angesteuert sind, kann auch der defekte Bremskreis entsprechend festgestellt werden.

In den Figuren 4 und 5 wird die Nothandlüftung dargestellt. Hierbei handelt es sich um einen im Querschnitt L-förmig ausgebildeten Nothandlüftbügel 13 (links) und einen Nothandlüftbügel 14 (rechts), welche zum Lüften der Bremse in Richtung der Pfeile 18 zusammengedrückt werden, um beim Stromausfall die Bremse zu lüften, d.h. freizumachen. Über die Schrauben 12 für die Nothandlüftung, welche in die vier Ankerscheiben 2.1, 2.2, 2.3, 2.4 eingeschraubt sind, werden durch Betätigung der beiden Nothandlüftbügel 13 und 14 die vier Ankerscheiben 2.1, 2.2, 2.3, 2.4 entgegen der Wirkung der Federn 9 in Richtung auf den Spulenträger 1 angezogen und die Bremse somit mechanisch freigemacht (gelüftet).

### Bezugszeichenliste:

- 1: Spulenträger
- 2: Ankerscheibe
- 2.1: 1. Ankerscheibe
- 2.2: 2. Ankerscheibe
- 2.3: 3. Ankerscheibe
- 2.4: 4. Ankerscheibe
- 3: Magnetspule
- 3.1: 1. Magnetspule
- 3.2: 2. Magnetspule
- 3.3: 3. Magnetspule
- 3.4: 4. Magnetspule
- 4: Bremsrotor
- 5: Reibbeläge
- 6: Verzahnte Nabe
- 7: Befestigungsschrauben
- 8: Abstandsbuchse
- 9: Federn
- 10: Übertragungsstift
- 11: Bohrung in Ankerscheibe 2
- 12: Schraube für Nothandlüftung
- 13: Nothandlüftbügel links
- 14: Nothandlüftbügel rechts
- 15: Mikroschalter Lüftüberwachung
- 16: Flanschplatte
- 17: Befestigungsschrauben für Flanschplatte 16
- 18: Lüftrichtung
- 19: Abdeckung der Bremse

## Patentansprüche

1. Elektromagnetisch lüftende Federdruckbremse zum Anbau an eine Maschinenwand oder ähnliches zum Abbremsen einer zentralen Welle über einen zugeordneten Bremsrotor mit beiderseits auf den Stirnflächen vor-gesehenen Reibbelägen (5),
mit einem von der zentralen Welle durchsetzten Spulenträger (1) mit mindestens einer Magnetspule (31, 32, 33, 34) darin,
mit mindestens einer dem Spulenträger (1) bzw. der Magnetspule zugeordneten Ankerscheibe (2.1-2.4) die bei stromloser Spule gegen den Bremsrotor (4) gedrückt wird, der auf einer axial verzahnten Nabe (6) axial beweglich ist,
wobei der Spulenträger (1) einteilig und rechteckig, vorzugsweise quadratisch ausgebildet ist,
**dadurch gekennzeichnet,**
**dass** in dem einteilig ausgebildeten Spulenträger vier kreisrunde Magnetspulen (3.1 - 3.4) weitgehend symmetrisch zur zentralen Längsachse angeordnet sind,
**dass** den Magnetspulen jeweils vier rechteckige, vorzugsweise quadratische Ankerscheiben (2.1 - 2.4) zugeordnet sind, die separat voneinander beweglich ausgebildet und weitgehend symmetrisch um die zentrale Längsachse herum auf dem einteiligen Spulenträger zum Abbremsen des Bremsrotors angeordnet sind, wodurch
die von den vier separaten Ankerscheiben ausgebildeten Bremskreise zusammen ein redundantes Bremsmoment von 133,33 % eines geforderten Bremsmomentes von 100 % ergeben.

2. Bremse nach Anspruch 1, **dadurch gekennzeichnet, dass** die rechteckig, vorzugsweise quadratisch ausgeführte Bremse mit den rechteckigen Ankerscheiben (2.1, 2.2, 2.3, 2.4) quadratisch ausgeführt ist.

3. Bremse nach Anspruch 1, **dadurch gekennzeichnet, dass** für jeden der vier Bremskreise eine Lüftüberwachung (15) zugeordnet ist.

4. Bremse nach Anspruch 3, **dadurch gekennzeichnet, dass** die vier Lüftüberwachungen (15) elektrisch in Reihe geschaltet sind.

5. Bremse nach Anspruch 1, **dadurch gekennzeichnet, dass** im Spulenträger (1) Übertragungsstifte (10) eingepresst sind, welche in die Bohrungen (11) der Ankerscheibe (2) hineinragen und als Führung der Ankerscheibe und zur Drehmomentübertragung dienen.

6. Bremse nach Anspruch 1, **dadurch gekennzeichnet, dass** zur Betätigung der Nothandlüftung zwei Nothandlüftbügel (13 und 14) unter die Schrauben für die Nothandlüftung (12) gesteckt werden und beim Zusammendrücken der beiden Nothandlüftbügel (13 und 14) in Lüftrichtung (18) die Bremse gelüftet wird.

## Claims

1. An electromagnetically releasing spring-pressure brake for mounting on a machine wall or the like for braking a central shaft via an associated brake rotor having friction liners (5) on both end faces, including:
- a coil support (1) having at least one magnetic coil (3.1, 3.2, 3.3, 3.4) therein, said coil support (1) being penetrated by said central shaft,
- at least one armature disk (2.1 - 2.4) associated with said coil support (1) and with said magnetic coil, said armature disk being pressed against said brake rotor (4) when the coil is currentless, said brake rotor being axially movable on an axially splined hub,
wherein said coil support (1) is one-piece and rectangular, preferably square, **characterized in that**
- four circular magnetic coils (3.1 - 3.4) are arranged in said one-piece coil carrier essentially symmetrically to the central longitudinal axis,
- four rectangular, preferably square armature disks (2.1 - 2.4) are associated with said magnetic coils, said armature disks being designed separately from each other and being arranged essentially symmetrically around said central longitudinal axis on the one-piece coil-support for braking said brake rotor,
- whereby the braking circuits as formed by said four separate armature disks result in combination in a redundant braking torque of 133,33 % of the required braking torque of 100 %.

2. Brake according to claim 1, **characterized in that** the rectangular, preferably square brake is designed with the rectangular armature disks (2.1, 2.2, 2.3, 2.4) in a square manner.

3. Brake according to claim 1, **characterized in that** a release control (15) is provided for each of the four braking circuits.

4. Brake according to claim 3, **characterized in that** said four release controls (15) are arranged electrically in series.

5. Brake according to claim 1, **characterized in that** transfer pins (10) are pressed into coil support (1) and extend into drill holes (11) in armature disk (2) for guidance of the armature disk and for torque transfer.

6. Brake according to claim 1, **characterized in that** for effecting the manual emergency release two emergency release hand brackets (13 and 14) are placed under the screws (12) for the emergency release and upon pressing together of both emergency hand release brackets (13 and 14) in release direction (18) the brake is released.

## Revendications

1. Frein à ressort à desserrage électromagnétique, destiné au montage sur une paroi de machine ou analogues, pour le freinage d'un arbre central par l'intermédiaire d'un rotor de frein associé, comprenant des garnitures de friction (5) prévues bilatéralement sur les surfaces frontales,
un porte-bobines (1), traversé par l'arbre central, avec au moins une bobine magnétique (3.1, 3.2, 3.3, 3.4) logée dans ce dernier,
au moins un disque d'induit (2.1 - 2.4), associé au porte-bobines (1) ou à la bobine magnétique, qui est pressé dans l'état hors tension de la bobine contre le rotor de frein (4) mobile axialement sur un moyeu (6) à denture axiale, le porte-bobines (1) ayant une réalisation monobloc et rectangulaire, de préférence carrée,
**caractérisé en ce que**
quatre bobines magnétiques (3.1 - 3.4) circulaires sont disposées dans le porte-bobines monobloc, de façon essentiellement symétrique par rapport à l'axe longitudinal central,
quatre disques d'induit (2.1 - 2.4) rectangulaires, de préférence carrés, sont respectivement associés aux bobines magnétiques, lesquels disques ont une réalisation mobile séparément les uns des autres et sont disposés de façon essentiellement symétrique tout autour de l'axe longitudinal central sur le porte-bobines monobloc pour le freinage du rotor de frein,
les circuits de freinage, réalisés par les quatre disques d'induit séparés, fournissant ensemble de ce fait un couple de freinage redondant de 133,33% d'un couple de freinage de 100% requis.

2. Frein suivant la revendication 1, **caractérisé en ce que** le frein de réalisation rectangulaire, de préférence carrée, a une réalisation carrée avec les disques d'induit (2.1, 2.2, 2.3, 2.4) rectangulaires.

3. Frein suivant la revendication 1, **caractérisé en ce qu'**un contrôle de desserrage (15) est associé à chacun des quatre circuits de freinage.

4. Frein suivant la revendication 3, **caractérisé en ce que** les quatre contrôles de desserrage (15) ont un montage électrique en série.

5. Frein suivant la revendication 1, **caractérisé en ce que** des broches de transmission (10) sont emmanchées dans le porte-bobines (1), lesquelles broches pénètrent dans les alésages (11) du disque d'induit (2) et servent de guidage du disque d'induit et à la transmission du couple de rotation.

6. Frein suivant la revendication 1, **caractérisé en ce que**, pour l'actionnement du desserrage manuel de secours, deux étriers de desserrage manuel (13 et 14) sont emboîtés au-dessous des vis (12) prévues pour le desserrage manuel de secours et le frein est desserré lors de la compression des deux étriers de desserrage manuel (13 et 14) dans la direction de desserrage (18).
